# EUROPEAN PATENT APPLICATION

(11) **EP 4 671 217 A1**
(43) Date of publication of application: **31.12.2025**
(21) Application number: 25185566.4
(22) Date of filing: 26.06.2025
(51) Int. Cl.: C02F 1/68, C02F 1/00, F24D 19/00, C02F 103/02

(54) **FILLING AND DOSING HEATING AND COOLING SYSTEMS**

(30) Priority: 27.06.2024 GB 202409231
(71) Applicant: Adey Holdings (2008) Limited, Stonehouse, GL10 3EZ (GB)
(72) Inventor: ROBERTS, Ian, Haresfield, Stonehouse GL 10 3EZ (GB); BRAY, Nick, Haresfield, Stonehouse GL 10 3EZ (GB)
(74) Representative: Noble, Frederick

(57) **Abstract**

A pressurisation unit for use with commercial heating and/or cooling systems is disclosed. The pressurisation unit tops up the system circuit with water in the usual way to compensate for water loss, e.g. due to leaks. The pressurisation unit measures the amount of water which has been pumped into the system circuit, and doses the system circuit with a chemical, for example a corrosion inhibitor, according to the amount of water which has been added.

## Description

The present invention relates to filling and dosing of heating and/or cooling systems. Particularly, it relates to a pressurisation unit for filling and dosing larger commercial heating and/or cooling systems.

### BACKGROUND TO THE INVENTION

Pressurisation units are well known and used on the majority of large commercial heating and/or cooling systems. It is rare for such systems to be entirely free from leaks, and due to the size of commercial systems it can often be difficult or too expensive to trace and repair those leaks. Obviously it is preferably to repair leaks where possible, but a very large system (e.g. in an office block accommodating thousands of workers) may have many small leaks, which together can add up to the loss of hundreds of litres of water a day.

Pressurisation units are installed into plant rooms to help maintain a constant system working pressure, compensating for pressure losses due to water loss from system leaks, servicing and maintenance. Pressurisation units work by the addition of mains water into the system until the required system pressure is restored.

A pressurisation unit typically comprises a break tank which is filled by a ball valve from a mains water supply. An outlet from the break tank is then connected via a pump and a non-return valve to the heating and/or cooling system circuit. A pressure transducer within the pressurisation unit constantly monitors the pressure of the heating system circuit. When system pressure falls below a preset limit, the pump within the pressurisation unit is activated, adding water from the break tank to the system. When the system pressure has returned to the required level, the pump is deactivated.

A disadvantage of these units is that water lost from the system is replaced by highly oxygenated, untreated water from the mains supply. Any corrosion inhibitor which has been added to the system water will be diluted, greatly diminishing the effectiveness of the inhibitor to protect the system and the components in it. If the level of corrosion inhibitor is not topped up, this will inevitably lead to serious corrosion issues within and across the heating and/or cooling system in question, resulting in potential system/equipment breakdowns and costly repairs.

It is an object of the present invention to mitigate these problems by providing a pressurisation unit which can supply a measured dose of inhibitor chemical into the system when fresh water is added by the pressurisation unit to maintain system pressure

### STATEMENT OF INVENTION

According to the present invention, there is provided a pressurisation unit for use with a hydronic space heating and/or cooling system, the pressurisation unit comprising:
an inlet for connection to a mains water supply;
a break tank for storing a quantity of water;
a valve arranged to fill the break tank from the inlet;
a pressurisation unit outlet for connection to a heating and/or cooling system circuit;
a pump arranged to force water from the break tank to the system circuit through the outlet;
a pressure transducer for measuring the pressure in the system circuit;
a controller adapted to switch on the pump when the pressure transducer indicates that the system circuit pressure is below a threshold, for maintaining pressure in the system circuit and replacing water lost through leaks; and
means for measuring the amount of water which has been added to the system circuit via the pump;
***characterised in that*** the pressurisation unit further comprises:
   a receptacle for storing a chemical, an outlet from the receptacle being in communication with the pressurisation unit outlet, downstream of the pump; and
   an actuator arranged to force a measured quantity of chemical from the receptacle into the system circuit,
   in which the controller is adapted to activate the actuator to force a measured quantity of chemical from the receptacle into the system circuit, after a predetermined amount of water has been added to the system circuit via the pump.

Advantageously, the pressurisation unit of the invention not only keeps a system topped up with water to replace any water lost to leaks, but also ensures that correct chemical dosing is achieved. The receptacle may be used to store a range of chemicals, and in some embodiments there may be multiple receptacles to accommodate different chemicals which cannot be mixed before dosing. However, in a preferred embodiment a single receptacle can contain a combined corrosion inhibitor, scale inhibitor and non-drain cleaner. By ensuring correct dosing with this combined chemical, corrosion and scale formation is minimised, and any corrosion products, scale deposits, biofilms, or other contaminant particles are mobilised by the cleaner so that they can be collected, for example in a sidestream filter.

The chemical may preferably be provided in a highly concentrated paste form. Methods for making concentrated paste chemical products are disclosed in GB2591292. A typical dosing rate may be, for example, to dose between 60ml and 75ml of chemical for every 50 litres of water pumped into the system. The chemical receptacle may have a capacity of for example between 1 and 10 litres, depending on the size of the unit.

In one embodiment, the chemical may be provided in a flexible wrapper, for example as disclosed in GB2624930. The wrapped chemical product is typically in the form of a roughly cylindrical "sausage", with crimped ends. One end can be cut, for example with scissors, to allow the chemical paste to be squeezed out of the wrapper. This form of packaging is well known for example for sealants used with "foil sausage" sealant guns.

The actuator may include a piston, and may include a screw drive. This may squeeze a dose of chemical out of the receptacle into the system circuit. Where the chemical is provided in a flexible wrapper, the actuator may apply pressure to the outside of the wrapper, in a similar manner to a sealant gun.

A non-return valve is preferably provided downstream of the pump, but between the pump and the outlet from the receptacle. This prevents both chemical and system water from flowing back through the pump into the break tank. This avoids damaging the pump by introducing a viscous paste.

Preferably, a sensor may be provided for detecting when the receptacle contains less than a predetermined quantity of chemical. This may cause a low-level alarm to activate, prompting refilling of the receptacle. In other embodiments, given that a measured dose is being provided every time chemical is added to the system, it may be simply a case of counting the amount of chemical which has been added. The low-level alarm can be activated based on a known amount of chemical originally added to the receptacle, less the amount which has been added. A reset means can be provided for operation when the receptacle is topped-up with chemical.

The means for measuring the amount of water added to the system via the pump may be a timer which measures pump runtime. Pumps generally have predictable constant flow rates when switched on, and so by measuring pump runtime the amount of water added to the system can generally be measured accurately enough.

In some embodiments, the electrical current or power supplied to the pump may be measured to derive an estimate of instantaneous flow rate. This may be useful in some embodiments where pump flow rate can change significantly depending on the static pressure difference between the inlet and the outlet of the pump. The instantaneous flow rate can then be integrated over the pump runtime to measure the amount of water added.

The amount of water added, and the amount of chemical added, are preferably logged and may be communicated on an interface, for example to a building automation and control system. For example, a BACnet and/or Modbus interface may be provided The components of the pressurisation unit, including the receptacle and actuator, may be provided in a common housing.

According to a second aspect of the invention, there is provided a method as claimed in claim 9. Preferable / optional features of the second aspect of the invention are set out in claims 10 to 17.

### BRIEF DESCRIPTION OF THE DRAWINGS

For a better understanding of the present invention, and to show more clearly how it may be carried into effect, reference will now be made by way of example only to the accompanying drawings, in which:
Figure 1 is a schematic showing the arrangement of components of a pressurisation unit according to the invention;
Figure 2 shows a chemical dosing arrangement forming part of the pressurisation unit of Figure 1; and
Figure 3 shows the chemical dosing arrangement of Figure 2, loaded for use with a packaged chemical product.

### DESCRIPTION OF PREFERRED EMBODIMENTS

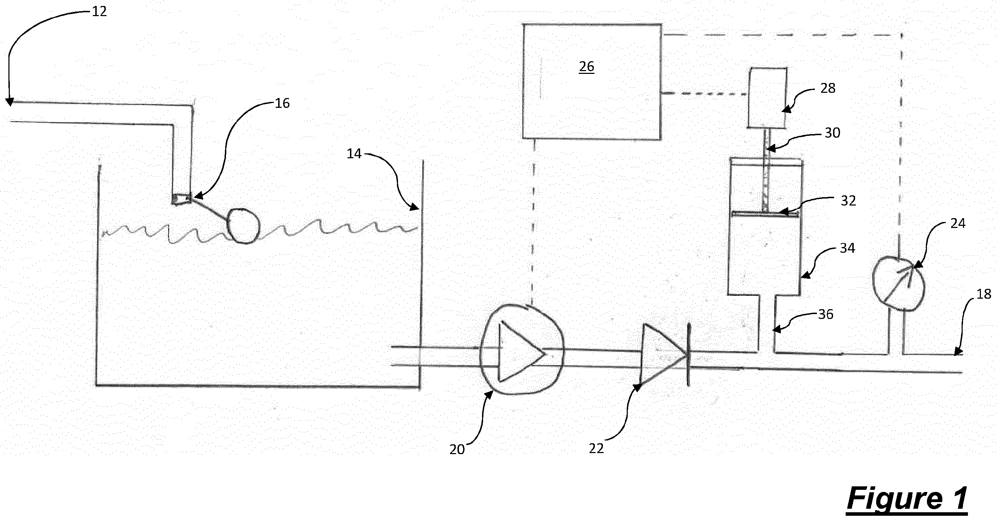

Referring firstly to Figure 1 a pressurisation unit is shown. An inlet 12 can be connected to a mains water supply in use. A break tank 14 is filled via a ball valve 16. The ball valve 16 is open whenever the break tank 14 is not full, and so the water will flow into the break tank 14 to top it up, whenever water is taken out of the break tank.

An outlet of the pressurisation unit is indicated at 18. The outlet of the pressurisation unit is connected in use to a heating and/or cooling system circuit.

An outlet from the break tank 14 is linked to the outlet of the pressurisation unit 18 via, firstly, a pump 20, and secondly a non-return valve 22. Hence the pump 20 can be used to force water from the break tank into the heating system circuit, and the non-return valve 22 prevents backflow from the pressurised system circuit into the break tank 14.

A pressure transducer 24 is provided, in communication with the outlet 18 and therefore in communication with the heating system circuit. Hence the pressure transducer 24 in use can measure the current pressure of the heating system circuit.

A controller 26 receives input from the pressure transducer 24, and controls the pump 20 to run when the pressure of the system circuit falls below a predetermined limit. The limit may be set for example as a user configurable option. When the pressure transducer indicates a pressure below this limit, the pump will be turned on and water will be forced from the break tank 14 into the system circuit via the outlet 18. The pressure of the system circuit will then rise, and in typical embodiments the controller 26 will be configured to switch the pump off once the system pressure has risen to a second predetermined limit. For example, the lower limit, below which the pump will switch on, might be set at 1.8 bar, and the upper limit, above which the pump will switch off, might be set at 2.0 bar.

Hence the controller 26 switches on the pump when required to keep the heating system pressure at the correct level by replacing water which has been lost.

Means are provided for measuring the amount of water which has been pumped into the system. In some embodiments, this could be directly measured, for example using a flow meter. However, it has been found to be accurate, and is preferable in terms of the simplicity of construction, to simply measure the runtime of the pump. Hence the controller can start a timer whenever the pump is turned on, and stop the timer when the pump is turned off. Because the pump delivers water to the heating system at a predictable flow rate, in some embodiments a sufficiently accurate measure of the volume of water delivered can be obtained simply by multiplying the pump runtime by the known flow rate of the pump. In other embodiments, particularly where used with heating systems running at higher pressures, a slightly more sophisticated technique may be used whereby the electrical current supplied to the pump is measured to estimate the instantaneous pump flow rate, and the instantaneous pump flow rate is integrated while the pump is running.

The controller 26 is connected to an actuator 28. In this case the actuator is an electric motor, for example a stepper motor, which turns a screw 30 to drive a piston head 32. The piston head 32 is driven within a receptacle in the form of a cylinder 34. An outlet 36 from the cylinder is connected to the outlet 18 of the pressurisation unit, downstream of the pump 20 and non-return valve 22. Hence the piston head 32 can be used to force chemical out of the receptacle 34, through the outlet 36 and into the system circuit via the pressurisation unit outlet 18. The non-return valve 22 prevents chemical from entering the mechanism of the pump 20 or the break tank 14.

Typically in embodiments, the controller will increment a register to count the volume of water entering the system circuit, until a threshold is reached, for example, 50 litres. The controller will then activate the actuator to deliver a measured dose (e.g. 70ml) of chemical into the system circuit. The register is then reset. After another 50 litres of water has entered the system, 70ml of chemical will be dosed again.

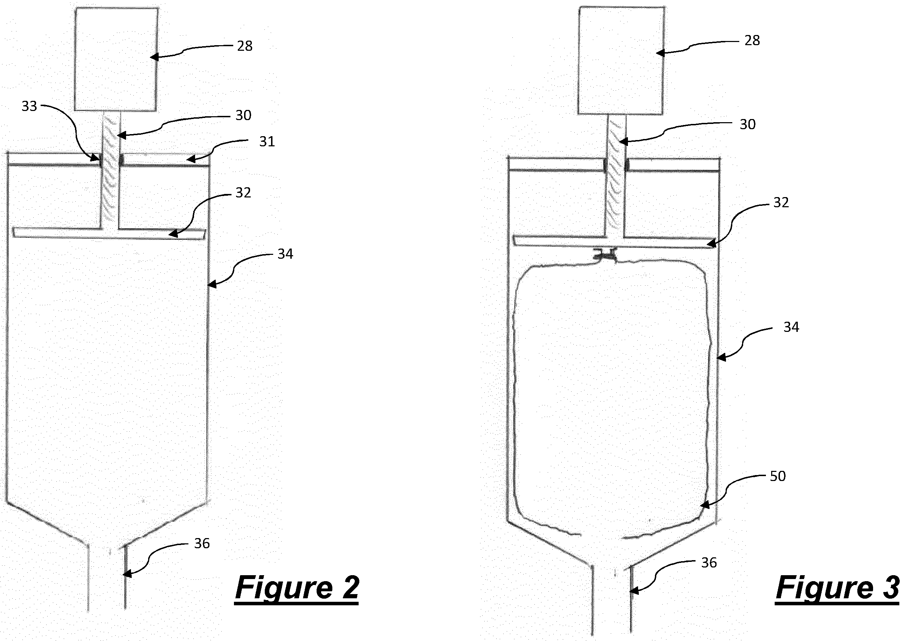

Referring now to Figure 2, the mechanism for dosing chemical will be described in more detail. A receptacle 34, which in this case is cylindrical, holds a chemical. The chemical is preferably in the form of a highly concentrated viscous paste. The chemical may be inserted into a receptacle via an opening (not visible in Figure 2) in a closure 31 at the top of the receptacle 34, or in some embodiments by removing the closure 31 altogether, for example by unscrewing it from the receptacle 34. A piston head 32 is mounted on the end of a threaded rod 30. The threaded rod 30 passes through a threaded aperture 33 in the closure 31, so that as the threaded rod 30 is rotated the piston head 32 can be moved longitudinally along the cylindrical receptacle 34. A motor and gearbox arrangement 28 is used to rotate the rod 30 and hence move the piston head 32. It will be appreciated that although the threaded rod is not shown protruding from the other side of the motor and gearbox arrangement (out of the top of Figure 2) in practice a rod of sufficient length to drive the piston head 32 all the way to the end of the receptacle 34 will be required.

When the piston head is driven towards the outlet 36 of the receptacle, towards the bottom of Figure 2, chemical paste in the receptacle is forced out of the outlet 36 and into the system circuit.

It is possible to deliver an accurately measured dose of chemical, by rotating the rod a known number of revolutions and hence moving the piston a known distance to deliver a known volume of chemical. This can be achieved for example by using a stepper motor.

A low-level sensor may be provided in the form of for example a limit switch to detect when the piston head 32 has nearly reached the bottom of the receptacle 34. Alternatively, it may be possible to derive the piston position, and therefore the amount of chemical remaining in the receptacle, by the controller keeping count of the number of doses / the number of revolutions of the screw thread 30.

It is envisaged that a chemical paste can be loaded directly into the receptacle 34 in the embodiment of Figure 2. As an alternative, a packaged chemical product 50 in the form of a chemical paste in a flexible wrapper 50 can be used. The packaged chemical product 50 may be a paste in a flexible plastic wrapper, similar to the packaging known as "sausages" in which sealants are commonly supplied. A suitable packaged chemical product is disclosed in GB2624930. As shown in Figure 3, an end (the bottom end as shown in Figure 3) can be cut off with scissors to make an opening in the package, and the piston head 32 can then squeeze the package 50, to squeeze chemical paste out of the package and through the outlet 36 into the heating system circuit.

Other ways of dosing chemical products are disclosed for example in WO2019020816, and may be incorporated into pressurisation units according to the invention.

The embodiments described above are provided by way of example only, and various changes and modifications will be apparent to persons skilled in the art without departing from the scope of the present invention as defined by the appended claims.

## Claims

1. A pressurisation unit for use with a heating and/or cooling system, the pressurisation unit comprising:
an inlet for connection to a mains water supply;
a break tank for storing a quantity of water;
a valve arranged to fill the break tank from the inlet;
a pressurisation unit outlet for connection to a heating and/or cooling system circuit;
a pump arranged to force water from the break tank to the system circuit through the outlet;
a pressure transducer for measuring the pressure in the system circuit;
a controller adapted to switch on the pump when the pressure transducer indicates that the system circuit pressure is below a threshold, for maintaining pressure in the system circuit and replacing water lost through leaks; and
means for measuring the amount of water which has been added to the system circuit via a pump;
***characterised in that*** the pressurisation unit further comprises:
a receptacle for storing a chemical, an outlet from the receptacle being in communication with the pressurisation unit outlet, downstream of the pump; and
an actuator arranged to force a measured quantity of chemical from the receptacle into the system circuit,
in which the controller is adapted to activate the actuator to force a measured quantity of chemical from the receptacle into the system circuit, after a predetermined amount of water has been added to the system circuit via the pump.

2. A pressurisation unit as claimed in claim 1, in which the actuator includes a piston.

3. A pressurisation unit as claimed in claim 2, in which the actuator further includes a screw drive.

4. A pressurisation unit as claimed in any of the preceding claims, in which a non-return valve is provided downstream of the pump.

5. A pressurisation unit as claimed in claim 4, in which the non-return valve is provided between the pump and the outlet from the receptacle.

6. A pressurisation unit as claimed in any of the preceding claims, including a low-level alarm for indicating when the amount of chemical in the receptacle is below a predetermined amount.

7. A pressurisation unit as claimed in any of the preceding claims, in which the means for measuring the amount of water added to the system via the pump includes a timer for measuring the runtime of the pump.

8. A pressurisation unit as claimed in claim 7, in which the means for measuring the amount of water added to the system via the pump further includes an electrical current or power meter for measuring the electrical power delivered to the pump.

9. A method of maintaining water quality in a heating and/or cooling system, the method comprising:
providing a pressurisation unit according to any of the preceding claims,
connecting the inlet to a mains water supply and connecting the outlet to the system circuit of the heating and/or cooling system;
loading the receptacle of the pressurisation unit with a chemical.

10. A method as claimed in claim 9, in which the chemical includes a corrosion inhibitor, a scale inhibitor, and/or a non-drain cleaner.

11. A method as claimed in claim 9, in which the chemical is a combined corrosion inhibitor, scale inhibitor, and non-drain cleaner.

12. A method as claimed in claim 9 or claim 10, in which the chemical is provided in the form of a paste.

13. A method as claimed in claim 12, in which the paste has a viscosity greater than 20,000cP.

14. A method as claimed in claim 13, in which the paste is provided in a flexible wrapper.

15. A method as claimed in claim 14, in which the method comprises opening one end of the wrapper and inserting the wrapped chemical into the receptacle.
